Europäisches Patentamt

European Patent Office

Office européen des brevets

(19)

(11) Numéro de publication : **0 441 732 B1**

(12) **FASCICULE DE BREVET EUROPEEN**

(45) Date de publication du fascicule du brevet :
03.05.95 Bulletin 95/18

(51) Int. Cl.⁶ : **H04L 5/02**

(21) Numéro de dépôt : **91460003.6**

(22) Date de dépôt : **05.02.91**

(54) **Récepteur de données numériques à entrelacement temps-fréquence, à fenêtre temporelle de Nyquist.**

(30) Priorité : **06.02.90 FR 9001493**

(43) Date de publication de la demande :
**14.08.91 Bulletin 91/33**

(45) Mention de la délivrance du brevet :
**03.05.95 Bulletin 95/18**

(84) Etats contractants désignés :
**DE GB**

(56) Documents cités :
**US-A- 4 783 754
EBU REVIEW- TECHNICAL. no. 224, août 1987,
BRUSSELS BE pages 168 - 190; R.Lassalle, M.
Alard: "Principles of modulation and channel
coding for digital broadcasting for mobile
receivers"
ELECTRONICS. vol. 47, no. 12, 13 juin 1974,
NEW YORK US pages 96 - 102; R. W.Ramirez:
"The fast Fourier trasform's errors are predictable, therefor emanageable"**

(73) Titulaire : **FRANCE TELECOM
6, Place d'Alleray
F-75015 Paris (FR)**
Titulaire : **TELEDIFFUSION DE FRANCE S.A.
21-27, rue Barbès
F-92542 Montrouge Cédex (FR)**

(72) Inventeur : **Castelain, Damien, Résidence
Chézy
Appt. 102,
17 square Alain Fergent
F-35000 Rennes (FR)**
Inventeur : **Richard, Joel
6 rue de la Nida
F-35200 Rennes (FR)**
Inventeur : **Halbert-Lassalle, Roselyne
2 allée Raymond Cornon
F-35000 Rennes (FR)**
Inventeur : **Pommier, Daniel
Le Chant d'Alouettes
F-35130 Breal-Sous-Montfort (FR)**

(74) Mandataire : **Corlau, Vincent
c/o Cabinet Vidon,
Immeuble Germanium,
80 avenue des Buttes de Coesmes
F-35700 Rennes (FR)**

## Description

Le domaine de l'invention est celui de la réception de données numériques diffusées à haut débit, notamment vers des mobiles, dans des conditions de multipropagation, correspondant au processus de Rayleigh, et engendrant des phénomènes d'évanouissement, en présence de brouillages et de parasites impulsifs.

De façon plus générale, l'invention s'applique à la réception de signaux numériques dans des canaux affectés de trajets multiples et dont les caractéristiques varient dans le temps.

L'invention s'applique plus particulièrement, mais non exclusivement, au système de radiodiffusion sonore numérique dénommé système COFDM (Coded Orthogonal Frequency Division Multiplex (Multiplexage de Fréquences Orthogonales Codées)), tel que décrit dans les demandes de brevets françaises 86 09622 du 2 juillet 86, et 86 13271 du 23 septembre 86 au nom des mêmes déposants.

Le système de diffusion COFDM repose sur l'utilisation d'un procédé de modulation par multiplexage de fréquences porteuses orthogonales (OFDM), et d'un dispositif de codage de canal.

Le débit numérique d'un programme donné est réparti sur N voies de diffusion, c'est-à-dire sur N porteuses orthogonales. Les éléments constitutifs du signal sont ainsi répartis dans le domaine fréquentiel, et également dans le domaine temporel. Un entrelacement en temps et en fréquence des éléments numériques permet de maximiser l'indépendance statique des échantillons vis-à-vis du processus de Rayleigh et du caractère sélectif du canal.

En particulier, ce type de modulation permet d'éviter que deux éléments successifs du train de données soient émis à la même fréquence.

Le codage utilisé peut être avantageusement un codage convolutif. Il permet notamment d'absorber l'effet des variations d'amplitude du signal reçu, dues au processus de Rayleigh.

Le décodage est par exemple un décodage à maximum de vraisemblance du type décodage de Viterbi.

Dans les récepteurs COFDM connus, la démodulation consiste principalement en une transposition par un oscillateur local, un filtrage en bande de base, une conversion analogique-numérique, l'application d'une fenêtre temporelle sélectionnant les échantillons utiles dans le train numérique, et enfin une Transformation de Fourier Discrète (TFD) réalisant l'opération de séparation des différentes porteuses transmises.

La fenêtre temporelle utilisée classiquement est une fenêtre rectangulaire, affectant d'un poids égal chacun des échantillons sélectionnés.

Dans le multiplex de N porteuses du signal COFDM, chacune des porteuses est modulée de manière indépendante. La séparation fréquentielle entre deux porteuses voisines est de $1/t_s$, où $t_s$ est la durée de la partie utile d'un symbole.

L'application sur le signal numérique d'une fenêtre temporelle rectangulaire de longueur $t_s$ suivie de la TFD peut être interprétée dans le domaine fréquentiel comme l'utilisation d'un filtre adapté à chacune des porteuses, c'est-à-dire également comme un échantillonnage parfait du signal dans ce domaine fréquentiel.

L'absence de distorsion intersymbole lors de cet échantillonnage fréquentiel est assurée par la position des zéros de la fonction sin x/x, par la transformée de Fourier de la fenêtre rectangulaire ainsi que par l'hypothèse d'une détermination parfaite des points d'échantillonnage en fréquence.

Cette dernière condition n'est pas toujours respectée en raison des distorsions introduites par le canal de transmission (par exemple l'effet Doppler) ou plus simplement en raison d'un défaut d'asservissement de l'oscillateur local sur le signal reçu, notamment dû à la précision de la correction automatique de fréquence (CAF).

Il apparaît alors une interférence intersymbole dans le domaine fréquentiel.

L'objectif de l'invention est de pallier cet inconvénient.

Plus précisément, l'invention a pour objectif de fournir un dispositif minimisant l'interférence intersymbole dans le domaine fréquentiel, dans le cas d'un accord de fréquence imparfait. Ainsi, la résistance aux distorsions introduites par Doppler est augmentée.

Un autre objectif de l'invention est de fournir un tel dispositif ne nécessitant pas de modification de la structure du signal émis, ni des récepteurs. Notamment, le dispositif de l'invention est optionnel : sa présence améliore la qualité du signal décodé, mais n'est pas obligatoirement nécessaire.

Ces objectifs, ainsi que d'autres qui apparaîtront par la suite, sont atteints à l'aide d'un dispositif de minimisation de l'effet de la perte d'orthogonalité des fréquences porteuses à la réception d'un signal numérique du type constitué d'éléments numériques répartis dans l'espace fréquence f- temps t émis sous la forme de symboles constitués chacun d'un multiplex de N fréquences porteuses orthogonales modulées par un jeu d'éléments numériques, et diffusées simultanément, notamment destiné à la radiodiffusion à haut débit vers des mobiles, comprenant un module de transposition par un oscillateur local, de filtrage en bande de base et de conversion analogique-numérique, un module de fenêtrage temporel pour la sélection des échantillons utiles et un module de transformation mathématique, dans lequel ledit module de fenêtrage temporel réalise l'application d'une fenêtre temporelle du type fenêtre de Nyquist, à "roll-off" non nul.

Le terme "roll-off" est conservé dans le texte français, car usuellement employé par les spécialistes du domaine. On lui substitue parfois le terme "coefficient de retombée". Cependant, ce terme n'a pas exactement la même portée.

Le terme "roll-off" désigne la largeur des flancs d'une fenêtre.

Dans le cas d'un dispositif appliqué à un signal numérique comprenant un intervalle de garde entre chacun desdits symboles, le talon de ladite fenêtre temporelle de Nyquist a avantageusement une largeur inférieure à la demi-largeur dudit intervalle de garde.

Une telle fenêtre présente l'avantage de produire par transformée de Fourier des lobes secondaires d'amplitude(s) plus faible(s) que ceux produits par une fenêtre rectangulaire. Ce dispositif réalise une transposition inventive dans le domaine fréquentiel de l'analyse connue de Nyquist.

De façon préférentielle, chacun des flancs de ladite fenêtre temporelle de Nyquist est une arche de sinusoïde d'une demi-période.

En effet, ce type de fenêtre de Nyquist permet d'obtenir des lobes d'amplitude très réduite.

Avantageusement, ledit module de fenêtrage réalise, après application de ladite fenêtre de Nyquist, un repliement des premiers échantillons sélectionnés sur les derniers échantillons sélectionnés, et une sommation desdits premiers échantillons avec lesdits derniers échantillons.

Ainsi, il est possible de ramener le nombre d'échantillons obtenus par la fenêtre de Nyquist au nombre d'échantillons fournis par une fenêtre rectangulaire classique.

Dans un mode de réalisation préférentiel de l'invention, le dispositif comporte des moyens de détection des distorsions du canal, et des moyens d'asservissement du "roll-off" en fonction desdites distorsions.

Avantageusement, lesdits moyens d'asservissement du "roll-off" sont des moyens de sélection entre une fenêtre à "roll-off" nul et au moins une fenêtre à "roll-off" non nul.

D'autres caractéristiques et avantages de l'invention apparaîtront à la lecture de la description suivante d'un mode de réalisation préférentiel de l'invention, donnés à titre illustratif et non limitatif, et des dessins annexés, dans lesquels :
- la figure 1 illustre le positionnement du banc de filtres de réception effectué par la transformation de Fourier par rapport aux porteuses du signal reçu dans un récepteur de type connu, dans les cas d'accords parfait et imparfait de l'oscillateur local ;
- la figure 2 présente les réponses fréquentielles d'une fenêtre temporelle rectangulaire et d'une fenêtre temporelle de Nyquist ;
- la figure 3 est une représentation d'une fenêtre de Nyquist du type cosinus surélevé ;
- la figure 4 présente les caractéristiques d'une fenêtre de Nyquist selon l'invention, dans l'environnement COFDM ;
- la figure 5 est un schéma synoptique d'un récepteur de signaux COFDM selon l'invention.

Les différents aspects du mode de réalisation qui va être décrit ci-après concernent plus particulièrement la radiodiffusion sonore numérique vers des mobiles.

Toutefois, il est clair que le principe de diffusion numérique à haut débit de l'invention peut s'appliquer à tout type de communication, notamment dans les canaux soumis au processus de Rayleigh.

Dans l'application de radiodiffusion sonore numérique, un objectif peut être par exemple de transmettre seize programmes stéréophoniques dans une bande de fréquence de 8 MHz de largeur, avec un débit numérique après compression de l'ordre de 250 kbits/seconde par programme stéréophonique.

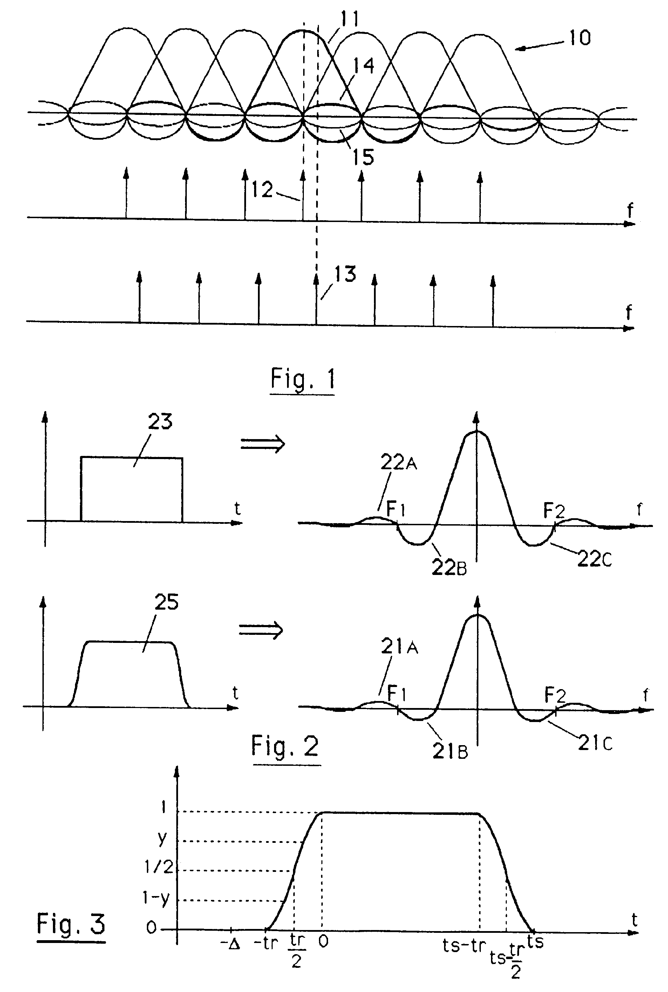

La figure 1 présente la fonction de transfert 10 du banc de filtre équivalent effectué par la transformée de Fourier. Elle est constituée de la juxtaposition des fonctions de transfert des filtres élémentaires 11 correspondant chacun à une des porteuses du signal reçu. La fonction de transfert d'un de ces filtres élémentaires suit une loi en $sin(x)/x$ dans le cas de l'utilisation d'une fenêtre temporelle rectangulaire.

La position de chacune des porteuses 12 du signal reçu, lorsque l'échantillonnage fréquentiel s'effectue parfaitement, c'est-à-dire en l'absence de Doppler et de défaut d'asservissement du CAF, correspond à un maximum de l'un des filtres élémentaires 11, et aux minima des autres filtres. Cela garantit l'absence d'interférence interporteuse lors de cet échantillonnage fréquentiel.

Dans le cas par exemple d'un défaut d'asservissement de l'oscillateur local, la position d'une porteuse donnée 13 affecte la sortie de plusieurs des filtres élémentaires 11, 14, 15, sa position ne coïncidant plus avec les minima de ces filtres. De l'interférence interporteuse est alors introduite en sortie de chacun des filtres élémentaires du banc de filtre 10.

Le principe de l'invention est d'utiliser une fenêtre temporelle non rectangulaire, dont les lobes secondaires par transformée de Fourier décroissent plus rapidement que la fonction en $sin(x)/x$. Par exemple, cette fenêtre peut être du type "Nyquist", bien que ce terme corresponde d'ordinaire à des fonctions de transfert dans le domaine fréquentiel de filtres réducteurs de bande, l'objectif étant, dans ce cas, de respecter les instants d'échantillonnage dans le domaine temporel.

Il s'agit donc d'une transposition inventive dans le domaine fréquentiel de l'analyse de Nyquist habituellement effectuée dans le domaine temporel, prenant en compte les caractéristiques du signal COFDM.

Il faut que la fenêtre temporelle choisie soit telle qu'aucune distorsion ne soit introduite lors de l'échantillonnage fréquentiel, lorsque l'oscillateur local est parfaitement accroché sur sa valeur nominale, et qu'aucune perturbation n'est apportée par le canal de transmission. Si F(f) est la transformée de Fourier de la fenêtre temporelle f(t), cela implique simplement que :

$$F(k/t_s) = 0 \text{ pour } k \in Z \text{ et } k \neq 0$$

On montre que cela est vrai lorsque la fenêtre temporelle vérifie le premier critère de Nyquist. Avec les conventions d'écriture du système COFDM, ce critère devient :

$$f(-t_r/2 + x) + f(-t_r/2 - x) = 1$$
$$f(t_s - t_r/2 + x) + f(t_s - t_r/2 - x) = 1 \text{ avec } 0 \leqq x \leqq t_r/2$$

où $f(t) = 1$ pour $0 < t < t_s - t_r$ et où $t_s$ est la durée de la partie utile d'un symbole et $t_r$ représente la largeur les fronts montant et descendant de la fenêtre. Cette valeur $t_r$ doit vérifier:

$$t_r \leq \Delta,$$ où $\Delta$ est la longueur de l'intervalle de garde.

Parmi l'ensemble des fenêtres de Nyquist utilisables, on ne retient bien évidemment que celles offrant la propriété de décroissance rapide de leur transformée de Fourier lorsque la fréquence augmente. Un certain nombre de fenêtres vérifiant cette propriété sont répertoriées dans la littérature courante. On utilise notamment des fenêtres présentant une dérivée continue en tout point et préférentiellement des fenêtres ayant des flancs en arche de sinusoïde d'une demi-période.

A titre d'exemple, on peut utiliser la fenêtre dite en "cosinus surélevé", représentée en figure 3, et définie par :

$$f(x) = 1/2 + 1/2 \sin \pi/t_r (x + t_r/2) \text{ pour } -t_r \leqq x \leqq 0$$
$$f(x) = 1 \text{ pour } 0 < x < t_s - t_r$$
$$f(x) = 1/2 - 1/2 \sin \pi/t_r (x - t_s + t_r/2) \text{ pour } t_s - t_r < x \leqq t_s$$

La figure 2 compare la décroissance des lobes secondaires de la transformée de Fourier pour une fenêtre temporelle rectangulaire et une fenêtre temporelle de type Nyquist.

Les lobes secondaires $21_A$, $21_B$, $21_C$ produits par la fenêtre de Nyquist 25 sont d'amplitude plus faible que les lobes $22_A$, $22_B$, $22_C$ produits par la fenêtre rectangulaire 24. Les deux types de réponse s'annulent bien évidemment aux mêmes fréquences $F_1$, $F_2$, de façon que l'échantillonnage fréquentiel n'introduise pas d'interférence interporteuse lorsque le canal de transmission est parfait, c'est-à-dire lorsqu'il n'y a pas de Doppler et que l'accord en fréquence est parfaitement réalisé.

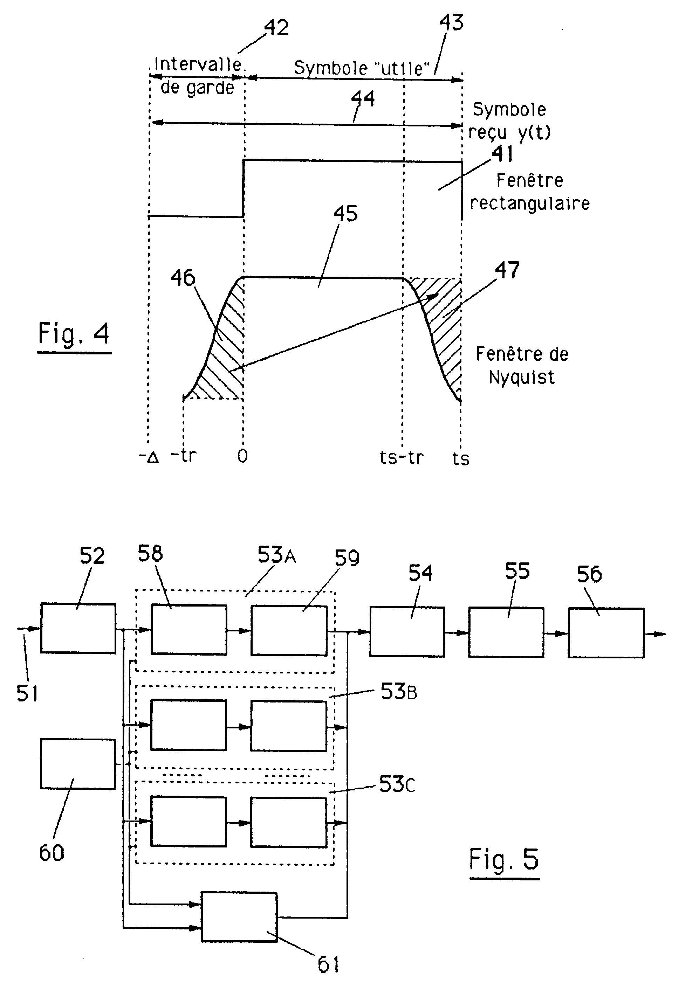

L'utilisation d'une fenêtre de Nyquist à la place d'une fenêtre rectangulaire nécessite l'élargissement temporel de cette fenêtre, ainsi que l'on peut le constater sur la figure 4.

En effet, une fenêtre rectangulaire 41 classique est définie de façon à ne prendre en compte que la partie utile 43 d'un symbole 44, et non l'intervalle de garde 42, dans le but d'éviter l'interférence intersymbole dans le domaine temporel.

Dans le cas d'une fenêtre de Nyquist 45, il est nécessaire que cette fenêtre soit plus large. Plus précisément, il faut que les transitions 46, 47 du filtre agissent sur des échantillons habituellement non utilisés dans le cas d'une fenêtre rectangulaire.

De façon à éviter toute interférence intersymbole, on choisit la durée $t_r$ des deux transitions de façon que $t_r$ soit inférieure ou égale à $\Delta$, durée de l'intervalle de garde 42.

Dans le cas particulier du COFDM, la complexité introduite par l'augmentation du nombre d'échantillons peut être réduite. En effet, il est possible de ramener la partie sous le flanc montant 46 de la fenêtre à l'intérieur du symbole utile, en réalisant un repliement et une sommation de la partie 46 sous le flanc montant sur la partie 47 sous le flanc descendant. Ainsi, le nombre de coefficients à traiter par la transformation de Fourier est identique à celui obtenu dans le cas d'une fenêtre rectangulaire.

En effet, si on considère y(t) le signal ayant fenêtrage et z(t) après fenêtrage, y étant défini pour $-\Delta \leqq t \leqq t_s$, et z(t) pour $0 \leqq t \leqq t_s$.

Dans le cas d'une fenêtre non rectangulaire f(t), la transformation devient:

$$z(t) = y(t) \text{ pour } 0 \leqq t \leqq t_s - t_r$$
$$z(t) = f(t) y(t) + f(t - t_s) y(t - t_s) \text{ pour } t_s - t_r < t \leqq t_s$$

On sait qu'effectuer une Transformée de Fourier Discrète N points sur ce signal z(t) est équivalent à effectuer une transformée 2N points sur le signal y(t)f(t) (prolongé par des zéros pour qu'il ait la durée désirée $2t_s$), et à ne conserver ensuite qu'un point sur 2.

Si la fenêtre est du type Nyquist (et symétrique), $f(t) + f(t - t_s) = 1/2$.

De plus, si aucune distorsion n'est introduite sur le signal, c'est-à-dire si $y(t) = x(t)$ où x(t) est le signal émis, on obtient, d'après la propriété de l'intervalle de garde du signal COFDM :

$$y(t - t_s) = x(t - t_s) = x(t).$$

On vérifie alors que $z(t) = x(t)$ : aucune distorsion n'est introduite par le fenêtrage si le canal de transmission est parfait, c'est-à-dire notamment si le CAF est parfaitement aligné.

Il est à noter que ce dispositif ne nécessite aucune modification du signal transmis, ce qui assure sa compatibilité avec les systèmes existants.

La figure 5 présente un mode de réalisation particulier d'un récepteur selon l'invention.

Le signal reçu 51 est tout d'abord de façon connue, soumis à un module 52 de transposition, de filtrage et de conversion analogique/numérique de l'ensemble du signal COFDM.

Le signal numérique obtenu est alors soumis au module $53_A$ de fenêtrage. On réalise ensuite une transformée de Fourier (TFD) 54, puis une démodulation 55, différentielle ou cohérente, et le décodage de canal 56.

Le module 53$_A$ de fenêtrage réalise dans un premier temps la saisie de N + p points (N étant le nombre d'échantillons utiles et p le nombre d'échantillons compris sous le flanc montant de la fenêtre), et une pondération 58, correspondant à l'application proprement dite de la fenêtre de Nyquist, et enfin le repliement et la sommation 59 des échantillons du premier flanc de la fenêtre sur le second, et plus précisément des p/2 premiers échantillons sur les p/2 derniers échantillons.

De façon avantageuse, le fenêtrage peut être adapté, en fonction du niveau des distorsions. Dans ce cas, un module 60 d'estimation des distorsions sélectionne une fenêtre particulière parmi plusieurs fenêtres 53$_A$, 53$_B$, 53$_C$, ...

Chacune de ces fenêtres 53$_A$, 53$_B$, 53$_C$ présente un "roll-off" (coefficient de retombée) différent. On peut notamment disposer d'une fenêtre rectangulaire 61 classique, et d'une ou plusieurs fenêtres selon l'invention.

En effet, on sait que lorsqu'un véhicule se déplace lentement, il y a peu d'effet Doppler. On peut alors réduire le "roll-off". Inversement, plus le véhicule se déplacera vite, plus on choisira une fenêtre large. Un autre phénomène doit être également pris en compte, à savoir l'étalement de la réponse impulsionnelle du canal de transmission. Ainsi, en présence d'échos longs, c'est-à-dire d'un canal très dispersif, la réponse impulsionnelle sera étalée dans le temps, et on aura donc intérêt à réduire le "roll-off".

De nombreux autres modes de mise en oeuvre du dispositif de l'invention apparaîtront de façon évidente à l'homme du métier.

## Revendications

1. Dispositif de minimisation de l'effet de la perte d'orthogonalité des fréquences porteuses à la réception d'un signal numérique du type constitué d'éléments numériques répartis dans l'espace fréquence f- temps t émis sous la forme de symboles constitués chacun d'un multiplex de N fréquences porteuses orthogonales modulées par un jeu d'éléments numériques, et diffusées simultanément, notamment destiné à la radiodiffusion à haut débit vers des mobiles, comprenant un module (52) de transposition par un oscillateur local, de filtrage en bande de base, et de conversion analogique-numérique, un module (53$_A$) de fenêtrage temporel pour la sélection des échantillons utiles et un module (54) de transformation mathématique, caractérisé en ce que ledit module (53$_A$) de fenêtrage temporel réalise l'application d'une fenêtre temporelle (25 ; 45) du type fenêtre de Nyquist, à "roll-off" non nul.

2. Dispositif selon la revendication 1, appliqué à un signal numérique comprenant un intervalle de garde (42) entre chacun desdits symboles, le talon de ladite fenêtre temporelle de Nyquist (25 ; 45) ayant avantageusement une largeur inférieure à la demi-largeur dudit intervalle de garde (42).

3. Dispositif selon l'une quelconque des revendications 1 ou 2, caractérisé en ce que chacun des flancs de ladite fenêtre temporelle de Nyquist (25 ; 45) est une arche de sinusoïde d'une demi-période.

4. Dispositif selon l'une quelconque des revendications 1 à 3, caractérisé en ce que ledit module (53$_A$) de fenêtrage réalise, après application de ladite fenêtre de Nyquist, un repliement des premiers échantillons (46) sélectionnés sur les derniers échantillons (47) sélectionnés, et une sommation (59) desdits premiers échantillons (46) avec lesdits derniers échantillons (47).

5. Dispositif selon l'une quelconque des revendications 1 à 4, caractérisé en ce qu'il comporte des moyens (60) de détection des distorsions du canal, et des moyens (60) d'asservissement du "roll-off" en fonction desdites distorsions.

6. Dispositif selon la revendication 5, caractérisé en ce que lesdits moyens (60) d'asservissement du "roll-off" sont des moyens (60) de sélection entre une fenêtre (61) à "roll-off" nul et au moins une fenêtre à "roll-off" non nul (53$_A$, 53$_B$, 53$_C$).

## Patentansprüche

1. Vorrichtung zur Minimierung der Folgen des Orthogonalitätsverlustes der Trägerfrequenzen beim Empfang eines digitalen Signals von der Art, welches aus digitalen Elementen besteht, die im Frequenz f - Zeit t - Raum verteilt sind und welches in der Form von Symbolen gesendet wird, die jeweils aus einem Multiplex von N orthogonalen Trägerfrequenzen bestehen, welche durch einen Satz digitaler Elemente moduliert werden und gleichzeitig gesendet werden, wobei die Vorrichtung, die insbesondere beim Hochleistungsfunkverkehr mit mobilen Stationen angewandt wird, ein Transpositionsmodul (52) mit einem örtlichen Schwingkreis für die Basisbandfilterung und für die Analog-Digital-Umwandlung, ein Fenster-Modul (53$_A$) für die Auswahl der nützlichen Abtastproben sowie ein mathematisches Transformationsmodul (54) umfaßt,

dadurch gekennzeichnet, daß das Fenster-Modul ($53_A$) die Anwendung eines Zeitfensters (25; 45) vom Nyquist-Typ, dessen "roll-off" nicht null ist, realisiert.

2. Vorrichtung gemäß Anspruch 1, angewandt auf ein digitales Signal, welches zwischen jeden der Symbole ein Schutzintervall (42) umfaßt, wobei die Breite der Endflanke des Nyquist-Zeitfensters (25; 45) vorteilhafterweise geringer ist, als die halbe Breite des Schutzintervalls (42).

3. Vorrichtung gemäß einem der Ansprüche 1 oder 2,
   dadurch gekennzeichnet, daß jede Flanke des Nyquist-Zeitfensters (25; 45) einer halben Periode einer Sinuskurve entspricht.

4. Vorrichtung gemäß einem der Ansprüche 1 bis 3, dadurch gekennzeichnet, daß das Fenstermodul ($53_A$) nach Anwendung des Nyquist-Zeitfensters ein Falten der ersten ausgewählten Abtastproben (46) mit den letzten ausgewählten Abtastproben (47) wurde und die Summierung (59) der ersten Abtastproben (46) und der letzten Abtastproben (47) bewirkt.

5. Vorrichtung gemäß einem der Ansprüche 1 bis 4, dadurch gekennzeichnet, daß sie über Mittel (60) zur Erfassung der Kanalverzerrungen verfügt und über Mittel (60) zur Regelung des "roll-off" als Funktion der Verzerrungen.

6. Vorrichtung gemäß Anspruch 5,
   dadurch gekennzeichnet, daß die Mittel (60) zur Regelung des "roll-off" Mittel (60) zur Auswahl zwischen einem Fenster (61) mit "roll-off" Null und mindestens einem Fenster mit "roll-off", dessen Wert nicht Null ist ($53_A$, $53_B$, $53_C$) sind.

## Claims

1. Device for minimizing the effect of the loss of orthogonality of the carrier frequencies upon reception of a digital signal of the type consisting of digital elements distributed in the frequency-time f-t space transmitted in the form of symbols each consisting of a multiplex of N orthogonal carrier frequencies modulated by a set of digital elements and broadcast simultaneously, especially intended for radio broadcasting at high bit rate to mobile units, comprising a module (52) for transposition by a local oscillator, baseband filtering and analog-digital conversion, a time-based windowing module ($53_A$) for the selection of the useful samples and a mathematical transformation module (54), characterized in that the said time-based windowing module ($53_A$) applies a time-based window (25; 45) of the Nyquist window type with non-zero roll-off.

2. Device according to Claim 1, applied to a digital signal comprising a guard interval (42) between each of the said symbols, the toe of the said Nyquist time-based window (25; 45) advantageously having a width that is smaller than the half-width of the said guard interval (42).

3. Device according to either one of Claims 1 and 2, characterized in that each of the flanks of the said Nyquist time-based window (25; 45) is a half-period sinusoidal arch.

4. Device according to any one of Claims 1 to 3, characterized in that the said windowing module ($53_A$), after the application of the said Nyquist window, folds the first samples selected (46) back on the last samples selected (47), and sums (59) the said first samples (46) with the said last samples (47).

5. Device according to any one of Claims 1 to 4, characterized in that it includes means (60) for detecting the distortions of the channel, and means (60) for servo-controlling the roll-off as a function of the said distortions.

6. Device according to Claim 5, characterized in that the said means (60) for servo-controlling the roll-off are means (60) for making a selection between a window (61) with zero roll-off and at least one window with non-zero roll-off ($53_A$, $53_B$, $53_C$).

Fig. 1

Fig. 2

Fig. 3

7

Fig. 4

Fig. 5